(19) Europäisches Patentamt
European Patent Office
Office européen des brevets

(11) EP 3 588 623 A1

(12) **EUROPEAN PATENT APPLICATION**
published in accordance with Art. 153(4) EPC

(43) Date of publication:
**01.01.2020 Bulletin 2020/01**

(21) Application number: **18758371.1**

(22) Date of filing: **14.02.2018**

(51) Int Cl.:
***H01M 4/02*** *(2006.01)*
***H01M 4/66*** *(2006.01)*
***H01M 4/13*** *(2010.01)*
***H01G 11/28*** *(2013.01)*
***H01G 11/06*** *(2013.01)*

(86) International application number:
**PCT/JP2018/005069**

(87) International publication number:
**WO 2018/155281 (30.08.2018 Gazette 2018/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **24.02.2017 JP 2017033958**

(71) Applicant: **Zeon Corporation**
**Tokyo 100-8246 (JP)**

(72) Inventors:
- **SONOBE Kenya**
  **Tokyo 100-8246 (JP)**
- **ISSHIKI Yasuhiro**
  **Tokyo 100-8246 (JP)**

(74) Representative: **Maiwald Patent- und Rechtsanwaltsgesellschaft mbH**
**Elisenhof**
**Elisenstraße 3**
**80335 München (DE)**

# (54) ELECTRODE FOR ELECTROCHEMICAL ELEMENT, AND ELECTROCHEMICAL ELEMENT

(57) Provided is a new technique for ensuring high safety of an electrochemical device. An electrode for an electrochemical device comprises: a current collector; an electrode mixed material layer; and a conductive adhesive layer located between the current collector and the electrode mixed material layer, wherein the conductive adhesive layer contains a conductive material, a binder, and a foaming agent with a foaming temperature of 140 °C or more.

EP 3 588 623 A1

## Description

TECHNICAL FIELD

The present disclosure relates to an electrode for an electrochemical device, and an electrochemical device.

BACKGROUND

Electrochemical devices such as lithium ion secondary batteries, electric double-layer capacitors, and lithium ion capacitors have characteristics such as compact size, light weight, high energy-density, and the ability to be repeatedly charged and discharged, and are used in a wide range of applications. An electrochemical device normally includes a plurality of electrodes and a separator that separates these electrodes to prevent internal short-circuiting.

Attempts to improve separators have been conventionally made to prevent internal short-circuiting in electrochemical devices and ensure safety. For example, PTL 1 reports that the use of a separator for an electrochemical device including a predetermined plurality of separator layers can enhance the safety of the electrochemical device.

CITATION LIST

Patent Literature

PTL 1: JP 2016-181324 A

SUMMARY

(Technical Problem)

With diversified applications of electrochemical devices in recent years, there is demand for a new technique for suppressing thermal runaway such as abnormal heating and ignition caused by short-circuiting between electrodes to ensure higher safety.

It could therefore be helpful to provide a means for advantageously solving the problem stated above.

(Solution to Problem)

Through extensive studies to solve the problem, the inventors focused not on separators which have conventionally been a main subject of research in improving electrochemical devices to enhance safety, but on electrodes. The inventors discovered that, by providing a conductive adhesive layer containing a binder, a conductive material, and a foaming agent with a predetermined foaming temperature or more between a current collector and an electrode mixed material layer that constitute an electrode, thermal runaway caused by internal short-circuiting of an electrochemical device including the electrode can be suppressed to ensure high safety of the electrochemical device.

To advantageously solve the problem stated above, an electrode for an electrochemical device according to the present disclosure is an electrode for an electrochemical device comprising: a current collector; an electrode mixed material layer; and a conductive adhesive layer located between the current collector and the electrode mixed material layer, wherein the conductive adhesive layer contains a conductive material, a binder, and a foaming agent with a foaming temperature of 140 °C or more. As a result of using such an electrode that includes a conductive adhesive layer containing a binder, a conductive material, and a foaming agent with a foaming temperature of 140 °C or more, thermal runaway of the electrochemical device can be suppressed to ensure high safety of the electrochemical device.

In the present disclosure, the "foaming temperature" of the foaming agent can be measured by the method described in the EXAMPLES section of the present specification.

Preferably, in the electrode for an electrochemical device according to the present disclosure, the foaming agent is a melamine compound. As a result of using a melamine compound as the foaming agent, the current collector and the electrode mixed material layer can be firmly adhered through the conductive adhesive layer, and the rate characteristics of the electrochemical device can be improved.

Preferably, in the electrode for an electrochemical device according to the present disclosure, the foaming agent is at least one selected from the group consisting of melamine, azodicarbonamide, dinitrosopentamethylenetetramine, p,p'-oxybisbenzenesulfonyl hydrazide, and sodium hydrogen carbonate. As a result of using at least one of these foaming agents, high safety of the electrochemical device can be sufficiently ensured.

Preferably, in the electrode for an electrochemical device according to the present disclosure, a proportion of the foaming agent to a total solid content in the conductive adhesive layer is 0.01 mass% or more and 50 mass% or

less. As a result of the proportion of the foaming agent to the total solid content in the conductive adhesive layer being in this range, the adhesiveness between the current collector and the electrode mixed material layer through the conductive adhesive layer and the rate characteristics of the electrochemical device can be improved while sufficiently ensuring high safety of the electrochemical device.

Preferably, in the electrode for an electrochemical device according to the present disclosure, the binder is a polymer having at least one functional group selected from the group consisting of a carboxylic acid group, a hydroxyl group, an amino group, an epoxy group, an oxazoline group, a sulfonic acid group, a nitrile group, and an amide group. As a result of using a polymer having any of these functional groups as the binder, the current collector and the electrode mixed material layer can be firmly adhered, and the rate characteristics of the electrochemical device can be improved.

To advantageously solve the problem stated above, an electrochemical device according to the present disclosure comprises any of the electrodes for an electrochemical device described above. The electrochemical device comprising the above-described electrode has high safety because thermal runaway caused by short-circuiting between electrodes can be suppressed.

(Advantageous Effect)

It is therefore possible to provide an electrode for an electrochemical device that can ensure high safety of an electrochemical device.

It is also possible to provide an electrochemical device having high safety.

DETAILED DESCRIPTION

One of the disclosed embodiments will be described in detail below.

An electrode for an electrochemical device according to the present disclosure can be used as an electrode of an electrochemical device such as a lithium ion secondary battery, an electric double-layer capacitor, or a lithium ion capacitor. An electrochemical device according to the present disclosure includes the electrode for an electrochemical device according to the present disclosure.

(Electrode for electrochemical device)

The electrode for an electrochemical device according to the present disclosure includes a conductive adhesive layer. Specifically, the electrode for an electrochemical device according to the present disclosure includes a current collector and an electrode mixed material layer, and further includes, between the current collector and the electrode mixed material layer, a conductive adhesive layer that adheres the current collector and the electrode mixed material layer while ensuring conduction between the current collector and the electrode mixed material layer. The electrode for an electrochemical device according to the present disclosure may optionally include other layers besides the current collector, the electrode mixed material layer, and the conductive adhesive layer.

In the electrode for an electrochemical device according to the present disclosure, the conductive adhesive layer contains a conductive material and a binder, and further contains a foaming agent with a foaming temperature of 140 °C or more.

The electrode according to the present disclosure includes the conductive adhesive layer containing the foaming agent with a foaming temperature of 140 °C or more, and therefore can impart high safety to the electrochemical device including the electrode according to the present disclosure. The reason that the use of the electrode including the conductive adhesive layer containing the foaming agent with a foaming temperature of 140 °C or more can ensure high safety of the electrochemical device is presumed to be as follows. When short-circuiting occurs inside an electrochemical device due to entry of foreign matter into the electrochemical device, an electrode production failure, an electrochemical device design error, or the like, current flows through the short-circuited part, and as a result Joule heat is generated. When the separator dissolves due to this Joule heat and the area of the short-circuited part increases, in the further heated electrochemical device, decomposition of an electrolyte solution and the like cause the generation of flammable gas that induces abnormal heating and ignition. In the electrode according to the present disclosure, the conductive adhesive layer contains the above-described foaming agent. In the electrochemical device heated by Joule heat, the foaming agent foams and non-flammable gas is generated. As a result of the generation of the non-flammable gas, the electrode structure undergoes breakdown and the conductive path is disconnected to prevent the generation of Joule heat, and also flammable gas is diluted to thus delay fire spreading.

<Current collector>

As the current collector, a material having electrical conductivity and electrochemical durability may be selected

depending on the type of the electrochemical device. For example, a current collector of an electrode for a lithium ion secondary battery may be made of iron, copper, aluminum, nickel, stainless steel, titanium, tantalum, gold, or platinum. Of these materials, copper foil is particularly preferable as a current collector used for a negative electrode. On the other hand, aluminum foil is particularly preferable as a current collector used for a positive electrode. One of these materials may be used individually, or two or more of these materials may be used in combination in a freely selected ratio.

<Electrode mixed material layer>

As the electrode mixed material layer, for example, an electrode mixed material layer containing an electrode active material and a binder for an electrode mixed material layer may be selected depending on the type of the electrochemical device, without being limited thereto. For example, an electrode active material (positive/negative electrode active material) and a binder for an electrode mixed material layer (binder for a positive/negative electrode mixed material layer) in an electrode mixed material layer of an electrode for a lithium secondary battery may be known materials described in JP 2013-145763 A.

<Conductive adhesive layer>

The conductive adhesive layer is a layer between the current collector and the electrode mixed material layer, and contains the conductive material, the binder, and the foaming agent with a foaming temperature of 140 °C or more. The conductive adhesive layer may optionally contain other components besides the conductive material, the binder, and the foaming agent with a foaming temperature of 140 °C or more.

<<Conductive material>>

The conductive material is a component that can form a conductive path in the conductive adhesive layer to ensure conduction between the current collector and the electrode mixed material layer.

As the conductive material, conductive carbon materials, various metal fibers or foil, or the like may be used, without being limited thereto. Conductive carbon materials are preferable. Examples of conductive carbon materials include carbon black (e.g. acetylene black, Ketjen black® (Ketjen black is a registered trademark in Japan, other countries, or both), furnace black), single-walled or multi-walled carbon nanotubes (multi-walled carbon nanotubes include cup stack type), carbon nanohorns, vapor-grown carbon fibers, milled carbon fibers obtained by sintering and then crushing polymer fibers, a single-layer or multilayer graphene, and carbon non-woven fabric sheet obtained by sintering non-woven fabric made of polymer fibers. One of these conductive materials may be used individually, or two or more of these conductive materials may be used in combination in a freely selected ratio.

The proportion of the conductive material to the total solid content in the conductive adhesive layer is preferably 20 mass% or more, more preferably 30 mass% or more, and further preferably 50 mass% or more, and is preferably 90 mass% or less, more preferably 85 mass% or less, and further preferably 80 mass% or less. If the content proportion of the conductive material in the conductive adhesive layer is 20 mass% or more, the conduction between the current collector and the electrode mixed material layer can be sufficiently ensured to enhance the rate characteristics of the electrochemical device. If the content proportion of the conductive material in the conductive adhesive layer is 90 mass% or less, the adhesiveness between the current collector and the electrode mixed material layer through the conductive adhesive layer can be ensured.

**<<**Binder>>

The binder is a component that can ensure the adhesiveness between the current collector and the electrode mixed material layer and prevent components such as the conductive material and the below-described foaming agent from being detached from the conductive adhesive layer.

[Type of binder]

The binder is not limited as long as it is usable in electrochemical devices. For example, the binder may be a polymer obtained by polymerization of a monomer composition containing monomers that can display binding capacity (synthetic polymer, e.g. addition polymer obtained by addition polymerization). Examples of such a polymer include an aliphatic conjugated diene/aromatic vinyl-based copolymer (a polymer mainly containing an aliphatic conjugated diene monomer unit and an aromatic vinyl monomer unit), an acrylic-based polymer (a polymer containing a (meth)acrylic acid ester monomer unit), a fluorine-based polymer (a polymer mainly containing a fluorine-containing monomer unit), an acrylic acid/acrylamide-based copolymer (a polymer mainly containing a (meth)acrylic acid unit and a (meth)acrylamide

unit), and an acrylonitrile-based polymer (a polymer mainly containing a (meth)acrylonitrile unit). One of these polymers may be used individually, or two or more of these polymers may be used in combination in a freely selected ratio. Of these, an aliphatic conjugated diene/aromatic vinyl-based copolymer, an acrylic-based polymer, an acrylic acid/acrylamide-based copolymer, and a fluorine-based polymer are preferable.

Known monomers may be used as the aliphatic conjugated diene monomer that can form the aliphatic conjugated diene monomer unit of the aliphatic conjugated diene/aromatic vinyl-based copolymer, the aromatic vinyl monomer that can form the aromatic vinyl monomer unit of the aliphatic conjugated diene/aromatic vinyl-based copolymer, the (meth)acrylic acid ester monomer that can form the (meth)acrylic acid ester monomer unit of the acrylic-based polymer, and the fluorine-containing monomer that can form the fluorine-containing monomer unit of the fluorine-based polymer.

In the present disclosure, the phrase "containing a monomer unit" means that "a polymer obtained with the monomer includes a repeating unit derived from the monomer".

In the present disclosure, "mainly containing" one or more monomer units means that the total content proportion of the one or more monomer units is more than 50 mass% with respect to 100 mass% of the total content of all monomer units contained in the polymer.

In the present disclosure, "(meth)acryl" means acryl and/or methacryl, and "(meth)acrylo" means acrylo and/or methacrylo.

[Functional group of binder]

The polymer used as the binder preferably contains a functional group. In terms of further enhancing the adhesiveness between the current collector and the electrode mixed material layer and the rate characteristics of the electrochemical device, the functional group contained in the binder is preferably a carboxylic acid group, a hydroxyl group, an amino group, an epoxy group, an oxazoline group , a sulfonic acid group, a nitrile group, and an amide group (hereinafter these functional groups are also collectively referred to as "specific functional groups"), and more preferably a carboxylic acid group. One of these functional groups may be used individually, or two or more of these functional groups may be used in combination in a freely selected ratio.

The method of introducing any of the specific functional groups into the polymer is not limited. A polymer may be prepared using a monomer containing the specific functional group (specific functional group-containing monomer) to obtain a polymer containing a specific functional group-containing monomer unit, or a given polymer may be terminal-modified to obtain a polymer having the specific functional group at its terminal. The former method is preferable. That is, the polymer used as the binder preferably contains at least one of a carboxylic acid group-containing monomer unit, a hydroxyl group-containing monomer unit, an amino group-containing monomer unit, an epoxy group-containing monomer unit, an oxazoline group-containing monomer unit, a sulfonic acid group-containing monomer unit, a nitrile group-containing monomer unit, and an amide group-containing monomer unit as the specific functional group-containing monomer unit, and more preferably contains a carboxylic acid group-containing monomer unit as the specific functional group-containing monomer unit.

Examples of carboxylic acid group-containing monomers that can form carboxylic acid group-containing monomer units include monocarboxylic acids, derivatives of monocarboxylic acids, dicarboxylic acids, acid anhydrides of dicarboxylic acids, and derivatives of dicarboxylic acids.

Examples of monocarboxylic acids include acrylic acid, methacrylic acid, and crotonic acid.

Examples of monocarboxylic acid derivatives include 2-ethylacrylic acid, isocrotonic acid, $\alpha$-acetoxy acrylic acid, $\beta$-trans-aryloxy acrylic acid, and $\alpha$-chloro-$\beta$-E-methoxy acrylic acid.

Examples of dicarboxylic acids include maleic acid, fumaric acid, and itaconic acid.

Examples of derivatives of dicarboxylic acids include methyl maleic acid, dimethyl maleic acid, phenyl maleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleate.

Examples of acid anhydrides of dicarboxylic acids include maleic anhydride, acrylic acid anhydride, methyl maleic anhydride, and dimethyl maleic anhydride.

Furthermore, an acid anhydride that produces a carboxyl group upon hydrolysis can also be used as a carboxylic acid group-containing monomer. Of these, acrylic acid and methacrylic acid are preferable as carboxylic acid group-containing monomers. One of these carboxylic acid group-containing monomers may be used individually, or two or more of these carboxylic acid group-containing monomers may be used in combination in a freely selected ratio.

Examples of hydroxyl group-containing monomers that can form hydroxyl group-containing monomer units include ethylenic unsaturated alcohol such as (meth)allyl alcohol, 3-butene-1-ol, and 5-hexene-1-ol; alkanol esters of ethylenic unsaturated carboxylic acid such as 2-hydroxyethyl-acrylate, 2-hydroxypropyl-acrylate, 2-hydroxyethyl-methacrylate, 2-hydroxypropyl-methacrylate, di-2-hydroxyethyl-maleate, di-4-hydroxybutyl maleate, and di-2-hydroxypropyl itaconate; esters of (meth)acrylic acid and polyalkylene glycol represented by the general formula $CH_2 = CR^a\text{-COO-}(C_qH_{2q}O)_p\text{-H}$ (where p represents an integer from 2 to 9, q represents an integer from 2 to 4, and $R^a$ represents

a hydrogen atom or a methyl group); mono(meth)acrylic acid esters of dihydroxy ester of dicarboxylic acid such as 2-hydroxyethyl-2'-(meth)acryloyl oxyphthalate and 2-hydroxyethyl-2'-(meth)acryloyl oxysuccinate; vinyl ethers such as 2-hydroxyethyl vinyl ether and 2-hydroxypropyl vinyl ether; mono(meth)allyl ethers of alkylene glycol such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; glycerin mono(meth)allyl ether; mono(meth)allyl ether of halogen or hydroxy substitution of (poly)alkylene glycol such as (meth)allyl-2-chloro-3-hydroxypropyl ether and (meth)allyl-2-hydroxy-3-chloropropyl ether; mono(meth)allyl ether of polyhydric phenol such as eugenol and isoeugenol, and a halogen substitution thereof; (meth)allyl thioethers of alkylene glycol such as (meth)allyl-2-hydroxyethyl thioether and (meth)allyl-2-hydroxypropyl thioether; and amides having hydroxyl groups such as N-hydroxymethylacrylamide (N-methylolacrylamide), N-hydroxymethylmethacrylamide, N-hydroxyethylacrylamide, and N-hydroxyethylmethacrylamide. One of these hydroxyl group-containing monomers may be used individually, or two or more of these hydroxyl group-containing monomers may be used in combination in a freely selected ratio.

In the present disclosure, "(meth)allyl" means allyl and/or methallyl, and "(meth)acryloyl" means acryloyl and/or methacryloyl.

Examples of amino group-containing monomers that can form amino group-containing monomer units include dimethylaminoethyl (meth)acrylate, diethylaminoethyl (meth)acrylate, aminoethyl vinyl ether, and dimethylaminoethyl vinyl ether. One of these amino group-containing monomers may be used individually, or two or more of these amino group-containing monomers may be used in combination in a freely selected ratio.

In the present disclosure, "(meth)acrylate" means acrylate and/or methacrylate.

Examples of epoxy group-containing monomers that can form epoxy group-containing monomer units include a monomer containing a carbon-carbon double bond and an epoxy group.

Examples of the monomer containing a carbon-carbon double bond and an epoxy group include unsaturated glycidyl ethers such as vinyl glycidyl ether, allyl glycidyl ether, butenyl glycidyl ether, and o-allyl phenyl glycidyl ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl ester of 3-cyclohexenecarboxylic acid, and glycidyl ester of 4-methyl-3-cyclohexenecarboxylic acid. One of these epoxy group-containing monomers may be used individually, or two or more of these epoxy group-containing monomers may be used in combination in a freely selected ratio.

Examples of oxazoline group-containing monomers that can form oxazoline group-containing monomer units include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline. One of these oxazoline group-containing monomers may be used individually, or two or more of these oxazoline group-containing monomers may be used in combination in a freely selected ratio.

Examples of sulfonic acid group-containing monomers that can form sulfonic acid group-containing monomer units include vinyl sulfonic acid, methyl vinyl sulfonic acid, (meth)allyl sulfonic acid, styrene sulfonic acid, (meth)acrylic acid-2-ethyl sulfonate, 2-acrylamido-2-methylpropane sulfonic acid, and 3-allyloxy-2-hydroxypropane sulfonic acid. One of these sulfonic acid group-containing monomers may be used individually, or two or more of these sulfonic acid group-containing monomers may be used in combination in a freely selected ratio.

Examples of nitrile group-containing monomers that can form nitrile group-containing monomer units include an $\alpha,\beta$-ethylenically unsaturated nitrile monomer. The $\alpha,\beta$-ethylenically unsaturated nitrile monomer is not specifically limited other than being an $\alpha,\beta$-ethylenically unsaturated compound that has a nitrile group, and may for example be acrylonitrile; an $\alpha$-halogenoacrylonitrile such as $\alpha$-chloroacrylonitrile or $\alpha$-bromoacrylonitrile; or an $\alpha$-alkylacrylonitrile such as methacrylonitrile or $\alpha$-ethylacrylonitrile. One of these nitrile group-containing monomers may be used individually, or two or more of these nitrile group-containing monomers may be used in combination in a freely selected ratio.

Examples of amide group-containing monomers that can form amide group-containing monomer units include acrylamide and methacrylamide. One of these amide group-containing monomers may be used individually, or two or more of these amide group-containing monomers may be used in combination in a freely selected ratio.

For example, in the case where the polymer is an aliphatic conjugated diene/aromatic vinyl-based copolymer or an acrylic-based polymer, the content proportion of the specific functional group-containing monomer unit in the polymer with respect to 100 mass% of the total content of all monomer units contained in the polymer is preferably 0.3 mass% or more and more preferably 0.8 mass% or more, and is preferably 20 mass% or less and more preferably 10 mass% or less. If the content proportion of the specific functional group-containing monomer unit in the polymer is in the foregoing range, the adhesiveness between the current collector and the electrode mixed material layer through the conductive adhesive layer and the rate characteristics of the electrochemical device can be improved.

[Method of preparing binder]

The method of preparing the polymer as the binder is not limited. For example, the polymer as the binder is prepared through polymerization of a monomer composition containing the above-mentioned monomers in an aqueous solvent. The content proportion of each monomer in the monomer composition can be set in accordance with the content proportion of the desired monomer unit (repeating unit) in the polymer.
No specific limitations are placed on the mode of polymerization and a method such as solution polymerization, suspension polymerization, bulk polymerization, or emulsion polymerization can be used. Examples of types of polymerization reactions that can be used include ionic polymerization, radical polymerization, living radical polymerization, condensation polymerization, and addition polymerization. The polymerization may be carried out with known emulsifiers and polymerization initiators according to need.

[Content proportion of binder]

The proportion of the binder to the total solid content in the conductive adhesive layer is preferably 1 mass% or more, more preferably 5 mass% or more, and further preferably 10 mass% or more, and is preferably 40 mass% or less, more preferably 35 mass% or less, and further preferably 30 mass% or less. If the content proportion of the binder in the conductive adhesive layer is 1 mass% or more, the adhesiveness between the current collector and the electrode mixed material layer through the conductive adhesive layer can be enhanced. If the content proportion of the binder in the conductive adhesive layer is 40 mass% or less, the rate characteristics of the electrochemical device can be improved.

**<<**Foaming agent with foaming temperature of 140 °C or more>>

The foaming agent may be a component that generates non-flammable gas such as nitrogen, carbon dioxide, ammonia, or water vapor by thermal decomposition.
The foaming temperature of the foaming agent needs to be 140 °C or more, and is more preferably 150 °C or more and further preferably 200 °C or more, and is preferably 450 °C or less, more preferably 400 °C or less, and further preferably 350 °C or less. If the foaming temperature of the foaming agent is less than 140 °C, there is a possibility that the foaming agent foams during the production of the electrode or during the normal operation of the electrochemical device. If the foaming temperature of the foaming agent is 450 °C or less, the foaming agent appropriately foams during temperature increase of the inside of the electrochemical device due to internal short-circuiting, so that high safety of the electrochemical device can be sufficiently ensured.
As the foaming agent with a foaming temperature of 140 °C or more, any of an organic foaming agent and an inorganic foaming agent may be used.
Examples of the organic foaming agent include organic foaming agents that generate nitrogen as the non-flammable gas (hereafter also referred to as "nitrogen-based organic foaming agents"), such as a melamine compound, azodicarbonamide (foaming temperature: 200 °C), dinitrosopentamethylenetetramine (foaming temperature: 205 °C), p,p'-oxybisbenzenesulfonyl hydrazide (foaming temperature: 155 °C), and hydrazodicarbonamide (foaming temperature: 245 °C).
Examples of the inorganic foaming agent include sodium hydrogen carbonate (foaming temperature: 140 °C).
In the present disclosure, "melamine compound" includes melamine, derivatives of melamine, and salts thereof.
An example of melamine and derivatives of melamine is a compound expressed by the following Formula (I).

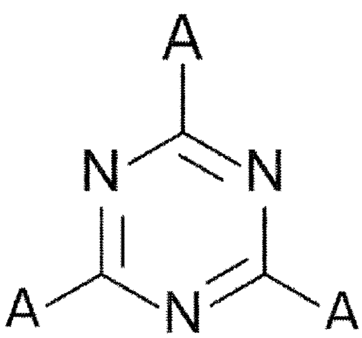

(I)

In Formula (I), each A independently represents a hydroxyl group or $NR^1R^2$ ($R^1$ and $R^2$ each independently represent a hydrogen atom, a hydrocarbon group, or a hydroxyl group-containing hydrocarbon group. In the case where there are a plurality of $R^1$ in Formula (I), the plurality of $R^1$ may be the same or different. In the case where there are a

plurality of $R^2$, the plurality of $R^2$ may be the same or different).

The hydrocarbon group and the hydroxyl group-containing hydrocarbon group of $R^1$ and $R^2$ may have one or more oxygen atoms (-O-) interposed between carbon atoms (in the case where two or more oxygen atoms are interposed, they are not adjacent to each other). The number of carbon atoms of the hydrocarbon group and the hydroxyl group-containing hydrocarbon group of $R^1$ and $R^2$ is not limited, but is preferably 1 or more and 5 or less.

Salts of melamine and derivatives of melamine are, for example, sulfate and cyanurate, without being limited thereto.

Specific examples of the melamine compound include melamine (foaming temperature: 200 °C), ammeline (foaming temperature: 300 °C), ammelide (foaming temperature: 350 °C), and melamine cyanurate (foaming temperature: 350 °C).

One of these foaming agents may be used individually, or two or more of these foaming agents may be used in combination in a freely selected ratio.

Of these, in terms of ensuring even higher safety of the electrochemical device, melamine, azodicarbonamide, dinitrosopentamethylenetetramine, p,p'-oxybisbenzenesulfonyl hydrazide, and sodium hydrogen carbonate are preferable, and dinitrosopentamethylenetetramine, p,p'-oxybisbenzenesulfonyl hydrazide, and sodium hydrogen carbonate are more preferable.

In terms of improving the adhesiveness between the current collector and the electrode mixed material layer through the conductive adhesive layer and the rate characteristics of the electrochemical device, the organic foaming agent is preferable, the nitrogen-based organic foaming agent is more preferable, and the melamine compound is further preferable.

The proportion of the foaming agent with a foaming temperature of 140 °C or more to the total solid content in the conductive adhesive layer is preferably 0.01 mass% or more, more preferably 0.1 mass% or more, and further preferably 3 mass% or more, and is preferably 50 mass% or less, and more preferably 30 mass% or less. If the content proportion of the foaming agent with a foaming temperature of 140 °C or more in the conductive adhesive layer is in the foregoing range, the adhesiveness between the current collector and the electrode mixed material layer through the conductive adhesive layer and the rate characteristics of the electrochemical device can be improved while sufficiently ensuring high safety of the electrochemical device.

<<Other components>>

Other components optionally contained in the conductive adhesive layer are not limited. For example, the conductive adhesive layer may contain a dispersant used when preparing the below-described composition for a conductive adhesive layer. The dispersant is a component blended to improve the dispersibility of the conductive material. Examples of the dispersant include non-ionic dispersants such as polyvinyl pyrrolidone and polyvinyl butyral, and carboxymethyl cellulose.

The conductive adhesive layer may contain a flame retardant such as a phosphoric compound or a silicone-based compound, in terms of improving the safety of the electrochemical device. The content of the flame retardant may be, for example, 30 parts by mass or less, or 15 parts by mass or less, per 100 parts by mass of the binder.

One of these other components may be used individually, or two or more of these other components may be used in combination.

<Other layers>

The electrode according to the present disclosure may optionally include other layers besides the above-described current collector, electrode mixed material layer, and conductive adhesive layer. The other layers are, for example, a known porous membrane layer provided on the electrode mixed material layer to improve heat resistance, and a known adhesive layer provided on the electrode mixed material layer to improve adhesiveness with another battery component such as a separator, without being limited thereto.

<Method of producing electrode for electrochemical device>

The method of producing the electrode according to the present disclosure is not limited as long as the current collector, the conductive adhesive layer, and the electrode mixed material layer can be stacked in this order.

For example, the electrode according to the present disclosure is produced through a step of applying a composition (composition for a conductive adhesive layer) containing a conductive material, a binder, a foaming agent with a foaming temperature of 140 °C or more, and a solvent onto a current collector and drying the applied composition for a conductive adhesive layer to form a conductive adhesive layer (conductive adhesive layer formation step), and a step of applying a composition (composition for an electrode mixed material layer) containing an electrode active material,

a binder for an electrode mixed material layer, and a solvent onto the conductive adhesive layer obtained in the conductive adhesive layer formation step and drying the applied composition for an electrode mixed material layer to form an electrode mixed material layer (electrode mixed material layer formation step).

The solvents used in the composition for a conductive adhesive layer and the composition for an electrode mixed material layer are not limited, and may be any of water and an organic solvent. Examples of the organic solvent include acetonitrile, N-methyl-2-pyrrolidone, tetrahydrofuran, acetone, acetyl pyridine, cyclopentanone, dimethylformamide, dimethyl sulfoxide, methylformamide, methyl ethyl ketone, furfural, ethylenediamine, dimethyl benzene (xylene), methyl benzene (toluene), cyclopentyl methyl ether, and isopropyl alcohol.

One of these solvents may be used individually, or two or more of these solvents may be used in mixture in a freely selected ratio.

The composition for a conductive adhesive layer and the composition for an electrode mixed material layer may contain optional components other than the above-described components. For example, the conductive adhesive composition may contain the other components that can be contained in the conductive adhesive layer described above.

<<Conductive adhesive layer formation step>>

No specific limitations are placed on the method by which the composition for a conductive adhesive layer is applied onto the current collector. For example, a method such as doctor blading, reverse roll coating, direct roll coating, gravure coating, extrusion coating, or brush coating may be used.

The composition for a conductive adhesive layer that has been applied onto the current collector may be dried by any commonly known method without any specific limitations. For example, drying may be carried out through drying by warm, hot, or low-humidity air; drying in a vacuum; or drying by irradiation with infrared light or electron beams. For example, the drying temperature is preferably 80 °C or more and 120 °C or less, in terms of suppressing decomposition of the foaming agent contained in the composition for a conductive adhesive layer.

<<Electrode mixed material layer formation step>>

No specific limitations are placed on the method by which the composition for an electrode mixed material layer is applied onto the conductive adhesive layer formed in the conductive adhesive layer formation step, and the same methods as those listed with regard to the conductive adhesive layer formation step may be used.

No specific limitations are placed on the method by which the composition for an electrode mixed material layer applied onto the conductive adhesive layer is dried, and the same methods as those listed with regard to the conductive adhesive layer formation step may be used.

(Electrochemical device)

The electrochemical device according to the present disclosure is a lithium ion secondary battery, an electric double-layer capacitor, or a lithium ion capacitor, without being limited thereto. The electrochemical device according to the present disclosure is preferably a lithium ion secondary battery. The electrochemical device according to the present disclosure includes the electrode according to the present disclosure. The electrochemical device according to the present disclosure including the electrode according to the present disclosure maintains high safety because thermal runaway is suppressed.

The following will describe an example in which the electrochemical device is a lithium ion secondary battery. However, the present disclosure is not limited to the following example. The lithium ion secondary battery as the electrochemical device according to the present disclosure includes electrodes (positive electrode and negative electrode), an electrolysis solution, and a separator. Here, either or both of the positive electrode and the negative electrode are the electrode for an electrochemical device according to the present disclosure.

<Electrode>

An electrode other than the above-described electrode for an electrochemical device usable in the lithium ion secondary battery as the electrochemical device according to the present disclosure is not limited, and may be a known electrode. Specifically, an electrode other than the above-mentioned electrode for an electrochemical device may be an electrode obtained by forming an electrode mixed material layer on a current collector using a known production method.

<Separator>

Examples of the separator that may be used in the disclosed embodiments include those described in JP 2012-204303 A, without being limited thereto. Of these, a fine porous membrane made of polyolefinic (i.e. polyethylene, polypropylene, polybutene, and polyvinyl chloride) resin is preferred, because such a membrane can reduce the total thickness of the separator, which increases the ratio of the electrode active material in the lithium ion secondary battery, consequently increasing the capacity per volume.

<Electrolysis solution>

The electrolysis solution is normally an organic electrolysis solution obtained by dissolving a supporting electrolyte in an organic solvent. For example, in a lithium ion secondary battery, the supporting electrolyte is a lithium salt. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferred as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolysis solution is not specifically limited so long as the supporting electrolyte can dissolve therein. In the case of a lithium ion secondary battery, suitable examples of the organic solvent include: carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixed liquid of such solvents may be used. Of these solvents, carbonates are preferable due to having a high permittivity and a wide stable potential region. Normally, as the viscosity of the solvent being used is lower, the lithium ion conductivity tends to increase. Hence, the conductivity of lithium ions can be adjusted by the type of solvent.

The concentration of the electrolyte in the electrolysis solution can be adjusted as needed. Any additive known in the art may be added to the electrolysis solution.

(Method of producing lithium ion secondary battery)

The lithium ion secondary battery according to the present disclosure can for example be produced by overlapping the positive electrode and the negative electrode via the separator, performing rolling, folding, or the like of the resultant product as required to place the resultant product in a battery container, pouring the electrolysis solution into the battery container, and sealing the battery container. At least one of the positive electrode and the negative electrode is the electrode for an electrochemical device according to the present disclosure. An expanded metal, an overcurrent prevention element such as a fuse or a PTC element, a lead plate, or the like may be placed in the battery container as required in order to prevent pressure from increasing inside the battery container and prevent overcharging or overdischarging from occurring. The shape of the battery may for example be a coin type, a button type, a sheet type, a cylinder type, a prismatic type, or a flat type.

EXAMPLES

The following will provide a more specific description of the present disclosure based on examples. However, the present disclosure is not limited to the following examples. In the following description, "%" and "parts" used in expressing quantities are by mass, unless otherwise specified.

In the examples and comparative examples, the following methods were used to evaluate the foaming temperature of the foaming agent, the adhesiveness between the current collector and the electrode mixed material layer through the conductive adhesive layer, the rate characteristics of the lithium ion secondary battery, and the electrode density change after a heating test (heating temperature: 200 °C or 350 °C).

<Foaming temperature of foaming agent>

In thermogravimetric analysis using a thermogravimetric analyzer (produced by Rigaku Corporation, "TG8110"), the mass was measured in an air atmosphere while increasing the temperature at a temperature increase rate of 20 °C /min from 25 °C to 500 °C, and the temperature at which the measured mass reached 50 % of the mass at the measurement start (25 °C) was taken to be the foaming temperature of the foaming agent.

<Adhesiveness between current collector and electrode mixed material layer through conductive adhesive layer>

<<Adhesiveness between current collector and negative electrode mixed material layer (lithium ion secondary battery)>>

A produced negative electrode was cut into strips having a length of 100 mm and a width of 10 mm to obtain test pieces. A piece of cellophane tape (provided in JIS Z 1522) was used to paste the surface of the negative electrode mix layer in each test piece to a test board (SUS substrate), with the surface having the negative electrode mix layer facing down. Subsequently, one end of the current collector was pulled and peeled in the vertical direction at a pulling speed of 50 mm/min, and the stress (N/m) applied was measured (note that the cellophane tape is fixed to the test board). The same measurement was performed three times. The average of the stress measured was calculated as the peel strength and evaluated based on the following criteria. A larger value of the peel strength indicates better adhesiveness between the negative electrode mix layer and the current collector.

A: peel strength of 8.0 N/m or more
B: peel strength of 5.0 N/m or more and less than 8.0 N/m
C: peel strength of less than 5.0 N/m.

<<Adhesiveness between current collector and positive electrode mixed material layer (lithium ion secondary battery)>>

A produced positive electrode was cut into strips having a length of 100 mm and a width of 10 mm to obtain test pieces. A piece of cellophane tape (provided in JIS Z 1522) was used to paste the surface of the positive electrode mix layer in each test piece to a test board (SUS substrate), with the surface having the positive electrode mix layer facing down. Subsequently, one end of the current collector was pulled and peeled in the vertical direction at a pulling speed of 50 mm/min, and the stress (N/m) applied was measured (note that the cellophane tape is fixed to the test board). The same measurement was performed three times. The average of the stress measured was calculated as the peel strength and evaluated based on the following criteria. A larger value of the peel strength indicates better adhesiveness between the positive electrode mix layer and the current collector.

A: peel strength of 80 N/m or more
B: peel strength of 50 N/m or more and less than 80 N/m
C: peel strength of less than 50 N/m.

<<Adhesiveness between current collector and electrode mixed material layer (electric double-layer capacitor)>>

A produced electrode was cut into strips having a length of 100 mm and a width of 10 mm to obtain test pieces. A piece of cellophane tape (provided in JIS Z 1522) was used to paste the surface of the electrode mix layer in each test piece to a test board (SUS substrate), with the surface having the electrode mix layer facing down. Subsequently, one end of the current collector was pulled and peeled in the vertical direction at a pulling speed of 50 mm/min, and the stress (N/m) applied was measured (note that the cellophane tape is fixed to the test board). The same measurement was performed three times. The average of the stress measured was calculated as the peel strength and evaluated based on the following criteria. A larger value of the peel strength indicates firmer adhesion between the electrode mixed material layer and the current collector, i.e. better adhesiveness between the electrode mix layer and the current collector.

A: peel strength of 5.0 N/m or more
B: peel strength of 3.0 N/m or more and less than 5.0 N/m
C: peel strength of less than 3.0 N/m.

<Rate characteristics of lithium ion secondary battery>

A produced lithium ion secondary battery was left for 5 hr at a temperature of 25°C after being filled with an electrolysis solution. Next, the lithium ion secondary battery was charged to a cell voltage of 3.65 V by a 0.2C constant-current method at a temperature of 25°C, and was then subjected to aging treatment for 12 hr at a temperature of 60°C. The lithium ion secondary battery was subsequently discharged to a cell voltage of 3.00 V by a 0.2C constant-current method at a temperature of 25°C. Thereafter, CC-CV charging of the lithium ion secondary battery was performed with a 0.2C constant current (upper limit cell voltage 4.35 V) and CC discharging of the lithium ion secondary battery was performed to a cell voltage of 3.00 V with a 0.2C constant current. This charging and discharging were repeatedly performed three times.

Next, the lithium ion secondary battery was charged and discharged between 4.20 V and 3.00 V in cell voltage

with a 0.2C constant current at an ambient temperature of 25°C. The discharge capacity in this operation was taken to be C0. Thereafter, CC-CV charging of the lithium ion secondary battery was performed with a 0.2C constant current in the same way as described above and discharging of the lithium ion secondary battery was performed to 2.5 V with a 1.0C constant current at an ambient temperature of 25°C. The discharge capacity in this operation was taken to be C1. A capacity change rate represented by $\Delta C = (C1/C0) \times 100$ (%) was obtained as a rate characteristics and was evaluated based on the following criteria. A larger value of the capacity change rate $\Delta C$ indicates higher discharge capacity at high currents and lower internal resistance in low-temperature environments.

A: capacity change rate $\Delta C$ of 85 % or more
B: capacity change rate $\Delta C$ of 75 % or more and less than 85 %
C: capacity change rate $\Delta C$ of less than 75 %.

<Electrode density change after heating test (200 °C)>

An electrode with the mass per unit area of an electrode laminate part composed of the electrode mixed material layer and the conductive adhesive layer (the electrode mixed material layer in the case where the electrode does not have the electrode conductive adhesive layer, the same applies hereafter) being W0 (unit: mg/cm$^2$) and the electrode laminate part thickness being T0 (unit: μm) was subjected to a heat treatment for 30 min at 200 °C in an air atmosphere, and the mass W200 (unit: mg/cm$^2$) per unit area and the electrode laminate part thickness T200 (unit: μm) of the electrode laminate part after the heat treatment were measured. The density change rate of the electrode laminate part was calculated using the following formula. A higher density change rate indicates that structural breakdown of the electrode by heating is facilitated and the resistance of the electrode itself increases, so that thermal runaway of the electrochemical device can be effectively suppressed.

$$\text{Density change rate} = ((W0/T0) - (W200/T200))/(W0/T0) \times 100\ (\%).$$

A: density change rate of 20 % or more
B: density change rate of 10 % or more and less than 20 %
C: density change rate of 8 % or more and less than 10 %
D: density change rate of less than 8 %.

<Electrode density change after heating test (350 °C)>

An electrode with the mass per unit area of an electrode laminate part being W0 (unit: mg/cm$^2$) and the electrode laminate part thickness being T0 (unit: μm) was subjected to a heat treatment for 30 min at 350 °C in an air atmosphere, and the mass W350 (unit: mg/cm$^2$) per unit area and the electrode laminate part thickness T350 (unit: μm) of the electrode laminate part after the heat treatment were measured. The density change rate of the electrode laminate part was calculated using the following formula. A higher density change rate indicates that structural breakdown of the electrode by heating is facilitated and the resistance of the electrode itself increases, so that thermal runaway of the electrochemical device can be effectively suppressed.

$$\text{Density change rate} = ((W0/T0) - (W350/T350))/(W0/T0) \times 100\ (\%).$$

A: density change rate of 20 % or more
B: density change rate of 10 % or more and less than 20 %
C: density change rate of 8 % or more and less than 10 %
D: density change rate of less than 8 %.

(Example 1)

<Preparation of binder (polymer A)>

A 5 MPa pressure vessel equipped with a stirrer was charged with 65 parts of styrene as an aromatic vinyl monomer, 35 parts of 1,3-butadiene as an aliphatic conjugated diene monomer, 2 parts of itaconic acid as a carboxylic acid group-containing monomer, 1 part of 2-hydroxyethyl acrylate as a hydroxyl group-containing monomer, 0.3 parts

of t-dodecyl mercaptan as a molecular weight modifier, 5 parts of sodium dodecylbenzenesulfonate as an emulsifier, 150 parts of deionized water as a solvent, and 1 part of potassium persulfate as a polymerization initiator. The contents of the pressure vessel were sufficiently stirred and were then heated to a temperature of 55°C to initiate polymerization. Cooling was performed in order to terminate the reaction once the amount of monomer consumption had reached 95.0 %. The aqueous dispersion containing the resultant polymer was adjusted to a pH of 8 through addition of a 5 % sodium hydroxide aqueous solution. Thereafter, unreacted monomers were removed by distillation under heating and reduced pressure. Cooling was then performed to a temperature of 30°C or lower to yield an aqueous dispersion containing a polymer A as a binder.

<Preparation of composition for conductive adhesive layer>

The aqueous dispersion of the polymer A as a binder was mixed with acetylene black as a conductive material, melamine cyanurate (foaming temperature: 350 °C) as a foaming agent, and carboxymethyl cellulose as a dispersant, to prepare a composition for a conductive adhesive layer of acetylene black : polymer A : melamine cyanurate : carboxymethyl cellulose : water = 20:5:2:0.5:72.5 (mass ratio).

<Production of current collector with conductive adhesive layer>

The composition for a conductive adhesive layer was applied to the surface of copper foil with a thickness of 15 μm as a current collector, by a casting method using a roll bar at a formation rate of 20 m/min. The composition for a conductive adhesive layer was dried at 60 °C for 1 min and then dried at 120 °C for 2 min, to form a conductive adhesive layer with a thickness of 1 μm on the current collector.

<Production of negative electrode including conductive adhesive layer>

A planetary mixer was charged with 48.75 parts of artificial graphite (theoretical capacity: 360 mAh/g) and 48.75 parts of natural graphite (theoretical capacity: 360 mAh/g) as negative electrode active materials and 1 part by solid content equivalents of carboxymethyl cellulose as a thickener. The contents of the planetary mixer were diluted to a solid content concentration of 60 % using deionized water and were subsequently kneaded for 60 min at a rotational speed of 45 rpm. Thereafter, 1.5 parts by solid content equivalents of the aqueous dispersion of the polymer A separately prepared in the same way as above was added and further kneading was performed for 40 min at a rotational speed of 40 rpm. Deionized water was added in order to adjust the viscosity to 3000 ± 500 mPa·s (measured by a B-type viscometer at 25 °C and 60 rpm) and thereby produce a slurry composition for a negative electrode mixed material layer.

A table coater was used to apply the slurry composition for a negative electrode mixed material layer to the conductive adhesive layer-side surface of the current collector with a conductive adhesive layer so that the application amount of the slurry composition was 11 ± 0.5 mg/cm$^2$. After this, the slurry composition was dried in an 80°C oven for 20 min and further in a 110°C oven for 20 min, to obtain a negative electrode web.

The negative electrode mixed material layer side of the produced negative electrode web was then roll pressed with a linear pressure of 11 t (ton) at a temperature of 25 ± 3 °C, to obtain a negative electrode with the density of the negative electrode laminate part composed of the negative electrode mixed material layer and the conductive adhesive layer being 1.60 g/cm$^3$. Subsequently, the negative electrode was left for 1 week in an environment of a temperature of 25 ± 3 °C and a relative humidity of 50 ± 5 %. The resultant negative electrode was used to evaluate the adhesiveness between the current collector and the negative electrode mixed material layer and the electrode density change after the heating test. The results are listed in Table 1.

<Production of positive electrode>

A planetary mixer was charged with 96 parts of a lithium complex oxide-based active material of Co-Ni-Mn (NMC111, $LiNi_{1/3}Co_{1/3}Mn_{1/3}O_2$) as a positive electrode active material, 2 parts of acetylene black (produced by Denka Company Limited., product name "HS-100") as a conductive material, and 2 parts of polyvinylidene fluoride (produced by Kureha Corporation, product name "KF-1100") as a binder. N-methyl-2-pyrrolidone (NMP) was also added as a dispersion medium so that the total solid content concentration was 67 % and mixing was performed to yield a slurry composition for a positive electrode mixed material layer.

A table coater was used to apply the resultant slurry composition for a positive electrode mixed material layer onto aluminum foil as a current collector so that the application amount of the slurry composition was 20 ± 0.5 mg/cm$^2$.

After this, the slurry composition was dried in an 80°C oven for 20 min and further in a 110°C oven for 20 min, to obtain a positive electrode web.

The positive electrode mixed material layer side of the produced positive electrode web was then roll pressed

with a linear pressure of 14 t (ton) at a temperature of 25 ± 3 °C, to obtain a positive electrode having a positive electrode mixed material layer density of 3.40 g/$cm^3$. Subsequently, the positive electrode was left for 1 week in an environment of a temperature of 25 ± 3 °C and a relative humidity of 50 ± 5 %.

<Preparation of separator>

As a separator, a polypropylene separator Celgard 2500 was used.

<Production of lithium ion secondary battery>

A wound cell (discharge capacity equivalent to 520 mAh) was prepared using the foregoing negative electrode, positive electrode, and separator, and was placed inside an aluminum packing material. Thereafter, the aluminum packing material was filled with an $LiPF_6$ solution having a concentration of 1.0 M as an electrolysis solution (solvent: mixed solvent of 3/7 (volume ratio) ethylene carbonate (EC)/diethyl carbonate (DEC), additive: 2 vol% (solvent ratio) of vinylene carbonate). The aluminum packing material was then closed with heat sealing at a temperature of 150°C to tightly seal up the opening of the aluminum packing material, and a lithium ion secondary battery was accordingly produced. The lithium ion secondary battery was used in order to evaluate the rate characteristics. The results are listed in Table 1.

(Example 2)

The polymer A as a binder, a composition for a conductive adhesive layer, a negative electrode including a conductive adhesive layer, a positive electrode, a separator, and a lithium ion secondary battery were produced in the same way as Example 1, except that the blending ratio was adjusted to acetylene black : polymer A : melamine cyanurate : carboxymethyl cellulose : water = 15:5:8:0.5:71.5 (mass ratio) in the preparation of the composition for a conductive adhesive layer. Evaluation was then performed in the same way as Example 1. The results are listed in Table 1.

(Example 3)

The polymer A as a binder, a composition for a conductive adhesive layer, a negative electrode including a conductive adhesive layer, a positive electrode, a separator, and a lithium ion secondary battery were produced in the same way as Example 1, except that the blending ratio was adjusted to acetylene black : polymer A : melamine cyanurate : carboxymethyl cellulose : water = 8:5:15:0.5:71.5 (mass ratio) in the preparation of the composition for a conductive adhesive layer. Evaluation was then performed in the same way as Example 1. The results are listed in Table 1.

(Example 4)

A composition for a conductive adhesive layer, a negative electrode including a conductive adhesive layer, a positive electrode, a separator, and a lithium ion secondary battery were produced in the same way as Example 1, except that a polymer B prepared in the following manner was used instead of the polymer A. Evaluation was then performed in the same way as Example 1. The results are listed in Table 1.

<Preparation of binder (polymer B)>

A reactor equipped with a stirrer was charged with 70 parts of deionized water, 0.15 parts of sodium lauryl sulfate (produced by Kao Corporation, product name "EMAL 2F") as an emulsifier, and 0.5 parts of ammonium persulfate. The gas phase in the reactor was purged with nitrogen gas and the reactor was heated to 60 °C.

In a separate vessel, a monomer composition was obtained by mixing 50 parts of deionized water, 0.5 parts of sodium dodecylbenzenesulfonate as an emulsifier, 94 parts of butylacrylate as a (meth)acrylic acid ester monomer, parts of acrylonitrile as a nitrile group-containing monomer, 2 parts of methacrylic acid as a carboxylic acid group-containing monomer, 1 part of N-hydroxymethylacrylamide as a hydroxyl group-containing monomer, and 1 part of allyl glycidyl ether as an epoxy group-containing monomer unit. The monomer composition was added continuously to the reactor over a period of 4 hr and was caused to polymerize. A reaction was carried out at 60 °C during the addition. After the addition was complete, stirring was performed for a further 3 hr at 70 °C to complete the reaction and produce an aqueous dispersion containing the polymer B as a binder.

(Example 5)

The polymer A as a binder, a composition for a conductive adhesive layer, a negative electrode including a conductive adhesive layer, a positive electrode, a separator, and a lithium ion secondary battery were produced in the same way as Example 1, except that polyvinyl pyrrolidone was used instead of carboxymethyl cellulose in the preparation of the composition for a conductive adhesive layer. Evaluation was then performed in the same way as Example 1. The results are listed in Table 1.

(Example 6)

The polymer A as a binder, a composition for a conductive adhesive layer, a negative electrode including a conductive adhesive layer, a positive electrode, a separator, and a lithium ion secondary battery were produced in the same way as Example 1, except that ammeline (foaming temperature: 300 °C) was used instead of melamine cyanurate, 1.8 parts of a polymer D prepared in the following manner was used as a binder in addition to the polymer A, and carboxymethyl cellulose was not used in the preparation of the composition for a conductive adhesive layer. Evaluation was then performed in the same way as Example 1. The results are listed in Table 1.

<Preparation of binder (polymer D)>

A 1 L flask equipped with a septum was charged with 720 g of deionized water. The deionized water was heated to a temperature of 40°C and the inside of the flask was purged with nitrogen gas at a flow rate of 100 mL/min. Next, 10 g of deionized water, 25 parts of acrylic acid as a carboxylic acid group-containing monomer, and 75 parts of acrylamide were mixed and were injected into the flask using a syringe. Thereafter, 8 parts of a 2.5 % potassium persulfate aqueous solution was added to the flask as a polymerization initiator using a syringe. After 15 min had passed, 22 parts of a 2.0 % tetramethylethylenediamine aqueous solution was added as a polymerization accelerator using a syringe. After 4 hr had passed, a further 4 parts of the 2.5 % potassium persulfate aqueous solution was added to the flask as a polymerization initiator and a further 11 parts of the 2.0 % tetramethylethylenediamine aqueous solution was added as a polymerization accelerator. Heating was performed to a temperature of 60°C in order to promote a polymerization reaction. After 3 hr had passed, the flask was opened to air to terminate the polymerization reaction, and the product was deodorized at a temperature of 80°C to remove residual monomers. Thereafter, the product was adjusted to a pH of 8 using a 10 % lithium hydroxide aqueous solution to yield an aqueous solution containing the polymer D as a binder.

(Example 7)

The polymer A and the polymer D as binders, a composition for a conductive adhesive layer, a negative electrode including a conductive adhesive layer, a positive electrode, a separator, and a lithium ion secondary battery were produced in the same way as Example 6, except that melamine (foaming temperature: 200 °C) was used instead of ammeline in the preparation of the composition for a conductive adhesive layer. Evaluation was then performed in the same way as Example 1. The results are listed in Table 1.

(Example 8)

The polymer A and the polymer D as binders, a composition for a conductive adhesive layer, a negative electrode including a conductive adhesive layer, a positive electrode, a separator, and a lithium ion secondary battery were produced in the same way as Example 6, except that melamine cyanurate (foaming temperature: 350 °C) was used instead of ammeline in the preparation of the composition for a conductive adhesive layer. Evaluation was then performed in the same way as Example 1. The results are listed in Table 1.

(Example 9)

<Preparation of binder (polymer C)>

Polyvinylidene fluoride (polymer C, produced by Kureha Corporation, product name "KF-1100") as a binder was dissolved in NMP to prepare an NMP solution of the polymer C (solid content concentration: 8 %).

<Preparation of composition for conductive adhesive layer>

The NMP solution of the polymer C as a binder was mixed with acetylene black as a conductive material and

melamine cyanurate (foaming temperature: 350 °C) as a foaming agent, to prepare a composition for a conductive adhesive layer of acetylene black : polymer C : melamine cyanurate : NMP = 20:5:2:73 (mass ratio).

<Production of current collector with conductive adhesive layer>

The composition for a conductive adhesive layer was applied to the surface of aluminum foil with a thickness of 20 μm as a current collector, by a casting method using a roll bar at a formation rate of 20 m/min. The composition for a conductive adhesive layer was dried at 60 °C for 1 min and then dried at 120 °C for 2 min, to form a conductive adhesive layer with a thickness of 1 μm on the current collector.

<Production of positive electrode including conductive adhesive layer>

A planetary mixer was charged with 96 parts of a lithium complex oxide-based active material of Co-Ni-Mn (NMC111, $LiNi_{1/3}Co_{1/3}Mn_{1/3}O_2$) as a positive electrode active material, 2 parts of acetylene black (produced by Denka Company Limited., product name "HS-100") as a conductive material, and 2 parts of polyvinylidene fluoride (produced by Kureha Corporation, product name "KF-1100") as a binder. NMP was also added as a dispersion medium so that the total solid content concentration was 67 % and mixing was performed to yield a slurry composition for a positive electrode mixed material layer.

A table coater was used to apply the resultant slurry composition for a positive electrode mixed material layer to the conductive adhesive layer-side surface of the current collector with a conductive adhesive layer so that the application amount of the slurry composition was 20 ± 0.5 mg/cm$^2$. After this, the slurry composition was dried in an 80°C oven for 20 min and further in a 110°C oven for 20 min, to obtain a positive electrode web.

The positive electrode mixed material layer side of the produced positive electrode web was then roll pressed with a linear pressure of 14 t (ton) at a temperature of 25 ± 3 °C, to obtain a positive electrode with the density of the positive electrode laminate part composed of the positive electrode mixed material layer and the conductive adhesive layer being 3.40 g/cm$^3$. Subsequently, the positive electrode was left for 1 week in an environment of a temperature of 25 ± 3 °C and a relative humidity of 50 ± 5 %. The resultant positive electrode was used to evaluate the adhesiveness between the current collector and the positive electrode mixed material layer and the electrode density change after the heating test. The results are listed in Table 1.

<Production of negative electrode>

A planetary mixer was charged with 48.75 parts of artificial graphite (theoretical capacity: 360 mAh/g) and 48.75 parts of natural graphite (theoretical capacity: 360 mAh/g) as negative electrode active materials and 1 part by solid content equivalents of carboxymethyl cellulose as a thickener. The contents of the planetary mixer were diluted to a solid content concentration of 60 % using deionized water and were subsequently kneaded for 60 min at a rotational speed of 45 rpm. Thereafter, 1.5 parts by solid content equivalents of the aqueous dispersion of the polymer A prepared in the same way as Example 1 was added and further kneading was performed for 40 min at a rotational speed of 40 rpm. Deionized water was added in order to adjust the viscosity to 3000 ± 500 mPa·s (measured by a B-type viscometer at 25 °C and 60 rpm) and thereby produce a slurry composition for a negative electrode mixed material layer.

A comma coater was used to apply the slurry composition for a negative electrode mixed material layer onto the surface of copper foil of 15 μm in thickness, used as a current collector, so that the application amount of the slurry composition was 11 ± 0.5 mg/cm$^2$. The copper foil onto which the slurry composition for a negative electrode mixed material layer had been applied was then conveyed inside an 80°C oven for 2 min and a 110°C oven for 2 min at a speed of 400 mm/min to dry the slurry composition on the copper foil, and thereby obtain a negative electrode web having the negative electrode mixed material layer formed on the current collector.

The negative electrode mixed material layer side of the produced negative electrode web was then roll pressed with a linear pressure of 11 t (ton) at a temperature of 25 ± 3 °C, to obtain a negative electrode having a negative electrode mixed material layer density of 1.60 g/cm$^3$. Subsequently, the negative electrode was left for 1 week in an environment of a temperature of 25 ± 3 °C and a relative humidity of 50 ± 5 %.

<Production of separator and secondary battery>

A separator was prepared in the same way as Example 1 except that the positive electrode and the negative electrode obtained as described above were used, and a lithium ion secondary battery was produced. The obtained lithium ion secondary battery was used to evaluate the rate characteristics. The results are listed in Table 1.

(Example 10)

An NMP solution of the polymer C was prepared in the same way as Example 9. The NMP solution of the polymer C as a binder was mixed with carbon nanotubes as a conductive material, melamine cyanurate (foaming temperature: 350 °C) as a foaming agent, and polyvinyl pyrrolidone as a dispersant, to prepare a composition for a conductive adhesive layer of carbon nanotubes : polymer C : melamine cyanurate : polyvinyl pyrrolidone : NMP = 20:5:2:0.5:72.5 (mass ratio). A positive electrode including a conductive adhesive layer, a negative electrode, a separator, and a lithium ion secondary battery were produced in the same way as Example 9, except that this composition for a conductive adhesive layer was used. Evaluation was performed in the same way as Example 9. The results are listed in Table 2.

(Examples 11 to 15)

The polymer A as a binder, a composition for a conductive adhesive layer, a negative electrode including a conductive adhesive layer, a positive electrode, a separator, and a lithium ion secondary battery were produced in the same way as Example 1, except that azodicarbonamide (foaming temperature: 200 °C), dinitrosopentamethylenetetramine (foaming temperature: 205 °C), p,p'-oxybisbenzenesulfonyl hydrazide (foaming temperature: 155 °C), hydrazodicarbonamide (foaming temperature: 245 °C), and sodium hydrogen carbonate (foaming temperature: 140 °C) were respectively used instead of melamine cyanurate in the preparation of the composition for a conductive adhesive layer. Evaluation was performed in the same way as Example 1. The results are listed in Table 2.

(Examples 16)

<Production of current collector for capacitor with conductive adhesive layer>

The composition for a conductive adhesive layer prepared in the same way as Example 1 was applied onto the surface of aluminum foil with a thickness of 20 μm as a current collector, by a casting method using a roll bar at a formation rate of 20 m/min. The composition for a conductive adhesive layer was dried at 60 °C for 1 min and then dried at 120 °C for 2 min, to form a conductive adhesive layer with a thickness of 1 μm on the current collector.

<Production of electrode for capacitor including conductive adhesive layer>

A slurry composition for an electrode mixed material layer of an electric double-layer capacitor was prepared by mixing 100 parts of steam-activated carbon obtained using coconut husk as a raw material (YP-50F produced by Kuraray Co., Ltd.) as an electrode active material, 2.0 parts by solid content equivalents of a 1.5 % aqueous solution of carboxymethyl cellulose as a dispersant, 5 parts of acetylene black (DENKA BLACKÒ powder produced by Denka Company Limited.) as a conductive material, 3 parts by solid content equivalents of the aqueous dispersion of the polymer A prepared in the same way as Example 1, and deionized water to adjust the solid content concentration to 42 %.

The obtained slurry composition for an electrode mixed material layer was then applied by doctor blading onto the conductive adhesive layer-side surface of the current collector for a capacitor with a conductive adhesive layer at a rate of 10 m/min. The applied slurry composition was first dried for 20 min at 60°C and then for 20 min at 120°C. After the drying, a square piece having a size of 5 cm by 5 cm was cut out to obtain an electrode for an electric double-layer capacitor with a thickness of 100 μm. The electrode for an electric double-layer capacitor was left for 1 week in an environment of a temperature of 25 ± 3 °C and a relative humidity of 50 ± 5 %. The resultant electrode was used to evaluate the adhesiveness between the current collector and the electrode mixed material layer and the electrode density change after the heating test. The results are listed in Table 2.

(Comparative Example 1)

The polymer A as a binder, a binder composition for a negative electrode mixed material layer, a slurry composition for a negative electrode mixed material layer, a negative electrode, a positive electrode, a separator, and a lithium ion secondary battery were produced in the same way as Example 1, except that melamine cyanurate was not blended and the blending ratio was adjusted to acetylene black : polymer A : carboxymethyl cellulose : water = 20:5:0.5:74.5 (mass ratio) in the preparation of the composition for a conductive adhesive layer. Evaluation was then performed in the same way as Example 1. The results are listed in Table 2.

(Comparative Example 2)

The polymer A as a binder, a binder composition for an electrode mixed material layer, a slurry composition for an electrode mixed material layer, and an electrode for an electric double-layer capacitor were produced in the same way as Example 16, except that melamine cyanurate was not blended and the blending ratio was adjusted to acetylene black : polymer A : carboxymethyl cellulose : water = 20:5:0.5:74.5 (mass ratio) in the preparation of the composition for a conductive adhesive layer. Evaluation was then performed in the same way as Example 16. The results are listed in Table 2.

In Table 1, "LIB" denotes a lithium ion secondary battery, "EDLC" denotes an electric double-layer capacitor, "MC" denotes melamine cyanurate, "ADCA" denotes azodicarbonamide, "DPT" denotes dinitrosopentamethylenetetramine, "OBSH" denotes p,p'-oxybisbenzenesulfonyl hydrazide, "HDCA" denotes hydrazodicarbonamide, "$NaHCO_3$" denotes sodium hydrogen carbonate, "SBR" denotes an aliphatic conjugated diene/aromatic vinyl-based copolymer (styrene butadiene copolymer), "ACR" denotes an acrylic-based polymer, "PVDF" denotes a fluorine-based polymer (polyvinylidene fluoride), "AA/AAm" denotes an acrylic acid/acrylamide-based copolymer, "CMC" denotes carboxymethyl cellulose, "PVP" denotes polyvinyl pyrrolidone, "AcB" denotes acetylene black, "CNT" denotes carbon nanotubes, and "NMP" denotes N-methyl-2-pyrrolidone.

[Table 1]

| | | | Example 1 | Example 2 | Example 3 | Example 4 | Example 5 | Example 6 | Example 7 | Example 8 | Example 9 |
|---|---|---|---|---|---|---|---|---|---|---|---|
| Electrochemical device | | | LIB | LIB | LIB | LIB | LIB | LIB | LIB | LIB | LIB |
| Conductive adhesive layer | Foaming agent | Type | MC | MC | MC | MC | MC | Ammeline | Melamine | MC | MC |
| | | | | | | | | | | | |
| | | Foaming temperature [°C] | 350 | 350 | 350 | 350 | 350 | 300 | 200 | 350 | 350 |
| | | Proportion to total solid content [mass%] | 7.3 | 28.1 | 52.6 | 7.3 | 7.3 | 7.3 | 7.3 | 7.3 | 7.4 |
| | First binder | Type | Polymer A | Polymer A | Polymer A | Polymer B | Polymer A | Polymer A | Polymer A | Polymer A | Polymer C |
| | | | SBR | SBR | SBR | ACR | SBR | SBR | SBR | SBR | PVDF |
| | | Functional group | Carboxylic acid group Hydroxyl group | Carboxylic acid group Hydroxyl group | Carboxylic acid group Hydroxyl group | Carboxylic acid group Epoxy group Nitrile group Hydroxyl group | Carboxylic acid group Hydroxyl group | Carboxylic acid group Hydroxyl group | Carboxylic acid group Hydroxyl group | Carboxylic acid group Hydroxyl group | - |
| | | Proportion to total solid content [mass%] | 18.2 | 17.5 | 17.5 | 18.2 | 18.2 | 18.2 | 18.2 | 18.2 | 18.5 |

(continued)

| | | | Example 1 | Example 2 | Example 3 | Example 4 | Example 5 | Example 6 | Example 7 | Example 8 | Example 9 |
|---|---|---|---|---|---|---|---|---|---|---|---|
| | Second binder | Type | - | - | - | - | - | Polymer D | Polymer D | Polymer D | - |
| | | | - | - | - | - | - | AA/AAm | AA/AAm | AA/AAm | - |
| | | Functional group | - | - | - | - | - | Carboxylic acid group Amide group | Carboxylic acid group Amide group | Carboxylic acid group Amide group | - |
| | | Proportion to total solid content [mass%] | - | - | - | - | - | 1.8 | 1.8 | 1.8 | - |
| | Dispersant | Type | CMC | CMC | CMC | CMC | PVP | - | - | - | - |
| | | Proportion to total solid content [mass%] | 1.8 | 1.8 | 1.8 | 1.8 | 1.8 | - | - | - | - |
| | Conductive material | Type | AcB | AcB | AcB | AcB | AcB | AcB | AcB | AcB | AcB |
| | | Proportion to total solid content [mass%] | 72.7 | 52.6 | 28.1 | 72.7 | 72.7 | 72.7 | 72.7 | 72.7 | 74.1 |
| Solvent of composition for conductive adhesive layer | | | Water | Water | Water | Water | Water | Water | Water | Water | NMP |
| Adhesiveness evaluation target electrode | | | Negative electrode | Negative electrode | Negative electrode | Negative electrode | Negative electrode | Negative electrode | Negative electrode | Negative electrode | Positive electrode |
| Evaluation | Adhesiveness | | A | A | C | A | A | A | A | A | A |
| | Rate characteristics | | B | B | C | B | B | B | B | B | B |
| | Electrode density change after heating test (200°C) | | C | C | C | C | C | C | B | C | C |
| | Electrode density change after heating test (350°C) | | A | A | A | A | A | A | A | A | A |

[Table 2]

| | | | Example 10 | Example 11 | Example 12 | Example 13 | Example 14 | Example 15 | Example 16 | Comparative Example 1 | Comparative Example 2 |
|---|---|---|---|---|---|---|---|---|---|---|---|
| Electrochemical device | | | LIB | LIB | LIB | LIB | LIB | LIB | EDLC | LIB | EDLC |
| Conductive adhesive layer | Foaming agent | Type | MC | ADCA | DPT | OBSH | HDCA | $NaHCO_3$ | MC | - | - |
| | | Foaming temperature [°C] | 350 | 200 | 205 | 155 | 245 | 140 | 350 | - | - |
| | | Proportion to total solid content [mass%] | 7.3 | 7.3 | 7.3 | 7.3 | 7.3 | 7.3 | 7.3 | - | - |
| | First binder | Type | Polymer C | Polymer A | Polymer A | Polymer A | Polymer A | Polymer A | Polymer A | Polymer A | Polymer A |
| | | | PVDF | SBR | SBR | SBR | SBR | SBR | SBR | SBR | SBR |
| | | Functional group | - | Carboxylic acid group Hydroxyl group | Carboxylic acid group Hydroxyl group | Carboxylic acid group Hydroxyl group | Carboxylic acid group Hydroxyl group | Carboxylic acid group Hydroxyl group | Carboxylic acid group Hydroxyl group | Carboxylic acid group Hydroxyl group | Carboxylic acid group Hydroxyl group |
| | | Proportion to total solid content [mass%] | 18.2 | 18.2 | 18.2 | 18.2 | 18.2 | 18.2 | 18.2 | 19.6 | 19.6 |
| | Second binder | Type | - | - | - | - | - | - | - | - | - |
| | | | - | - | - | - | - | - | - | - | - |
| | | Functional group | - | - | - | - | - | - | - | - | - |
| | | Proportion to total solid content [mass%] | - | - | - | - | - | - | - | - | - |

(continued)

| | | | Example 10 | Example 11 | Example 12 | Example 13 | Example 14 | Example 15 | Example 16 | Comparative Example 1 | Comparative Example 2 |
|---|---|---|---|---|---|---|---|---|---|---|---|
| | Dispersant | Type | PVP | CMC | CMC | CMC | CMC | CMC | CMC | CMC | CMC |
| | | Proportion to total solid content [mass%] | 1.8 | 1.8 | 1.8 | 1.8 | 1.8 | 1.8 | 1.8 | 2.0 | 2.0 |
| | Conductive material | Type | CNT | AcB | AcB | AcB | AcB | AcB | AcB | AcB | AcB |
| | | Proportion to total solid content [mass%] | 72.7 | 72.7 | 72.7 | 72.7 | 72.7 | 72.7 | 72.7 | 78.4 | 78.4 |
| Solvent of composition for conductive adhesive layer | | | NMP | Water | Water | Water | Water | Water | Water | Water | Water |
| Adhesiveness evaluation target electrode | | | Positive electrode | Negative electrode | Negative electrode | Negative electrode | Negative electrode | Negative electrode | Electrode | Negative electrode | Electrode |
| Evaluation | Adhesiveness | | A | B | B | B | B | C | A | C | C |
| | Rate characteristics | | B | B | B | B | B | C | - | C | - |
| | Electrode density change after heating test (200°C) | | C | B | A | A | C | A | C | D | C |
| | Electrode density change after heating test (350°C) | | A | A | A | A | A | A | A | D | C |

As can be understood from Table 1, in Examples 1 to 16 using an electrode including a conductive adhesive layer containing a conductive material, a binder, and a foaming agent with a foaming temperature of 140 °C or more, higher safety of an electrochemical device (lithium ion secondary battery or electric double-layer capacitor) was ensured than in Comparative Examples 1 to 2 using an electrode including a conductive adhesive layer containing a conductive material and a binder but not containing a foaming agent with a foaming temperature of 140 °C or more. In the electrode for a lithium ion secondary battery in Examples 1 to 14, the current collector and the electrode mixed material layer were firmly adhered through the conductive adhesive layer. A lithium ion secondary battery including such an electrode can display excellent rate characteristics. In the electrode for an electric double-layer capacitor in Example 16, the current collector and the electrode mixed material layer were firmly adhered through the conductive adhesive layer.

INDUSTRIAL APPLICABILITY

It is thus possible to provide an electrode for an electrochemical device that can ensure high safety of an electrochemical device.
It is also possible to provide an electrochemical device having high safety.

## Claims

1. An electrode for an electrochemical device, comprising:

   a current collector;
   an electrode mixed material layer; and
   a conductive adhesive layer located between the current collector and the electrode mixed material layer,
   wherein the conductive adhesive layer contains a conductive material, a binder, and a foaming agent with a foaming temperature of 140 °C or more.

2. The electrode for an electrochemical device according to claim 1, wherein the foaming agent is a melamine compound.

3. The electrode for an electrochemical device according to claim 1, wherein the foaming agent is at least one selected from the group consisting of melamine, azodicarbonamide, dinitrosopentamethylenetetramine, p,p'-oxybisbenzenesulfonyl hydrazide, and sodium hydrogen carbonate.

4. The electrode for an electrochemical device according to any of claims 1 to 3, wherein a proportion of the foaming agent to a total solid content in the conductive adhesive layer is 0.01 mass% or more and 50 mass% or less.

5. The electrode for an electrochemical device according to any of claims 1 to 4, wherein the binder is a polymer having at least one functional group selected from the group consisting of a carboxylic acid group, a hydroxyl group, an amino group, an epoxy group, an oxazoline group, a sulfonic acid group, a nitrile group, and an amide group.

6. An electrochemical device, comprising
   the electrode for an electrochemical device according to any of claims 1 to 5.

**INTERNATIONAL SEARCH REPORT**

International application No. PCT/JP2018/005069

A. CLASSIFICATION OF SUBJECT MATTER
Int.Cl. H01M4/02(2006.01)i, H01G11/28(2013.01)i, H01M4/66(2006.01)i, H01G11/06(2013.01)n, H01M4/13(2010.01)n

According to International Patent Classification (IPC) or to both national classification and IPC

B. FIELDS SEARCHED

Minimum documentation searched (classification system followed by classification symbols)
Int.Cl. H01M4/02, H01G11/28, H01M4/66, H01G11/06, H01M4/13

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2010-146726 A (KYORITSU CHEMICAL & CO., LTD.) 01 July 2010, paragraphs [0008]-[0039], [0077], [0078], [0082], [0125]-[0132], fig. 6 & JP 2010-149193 A & JP 2013-201133 A & JP 2015-38876 A | 1, 3, 4, 6<br>2, 3, 5 |
| X<br>Y | JP 2015-211004 A (TOPPAN PRINTING CO., LTD.) 24 November 2015, claims 1-5, paragraphs [0014], [0024], [0027]-[0038] (Family: none) | 1, 3, 4, 6<br>2, 3, 5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 April 2018 (17.04.2018) | 01 May 2018 (01.05.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2018/005069

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2005-11540 A (TOSHIBA CORP.) 13 January 2005, claims 1-4, paragraphs [0011], [0022]-[0026], [0073], [0080]-[0088] (Family: none) | 1, 3, 4, 6<br>2, 3, 5 |
| Y | JP 63-312623 A (NIPPON CHEMI-CON CORPORATION) 21 December 1988, page 2, upper left column, line 9 to lower left column, line 3 (Family: none) | 2, 3 |
| Y | JP 53-1993 A (DAINICHI-NIPPON CABLES, LTD.) 10 January 1978, page 2, upper right column, line 2 to page 3, upper left column, line 8 (Family: none) | 2, 3 |
| Y | WO 2013/062088 A1 (NIPPON ZEON CO., LTD.) 02 May 2013, paragraphs [0008], [0022], [0023]-[0119], [0171], [0182], [0183] & CN 103890124 A & KR 10-2014-0095475 A | 5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016181324 A
- JP 2013145763 A
- JP 2012204303 A